# EUROPEAN PATENT SPECIFICATION

(11) **EP 4 378 348 B1**
(45) Date of publication and mention of the grant of the patent: **01.10.2025**
(21) Application number: 22853580.3
(22) Date of filing: 08.08.2022
(51) Int. Cl.: A45C 13/00, A45C 11/00, H04B 1/3888, H04M 1/04, A45C 13/10, A45C 13/30, G06F 1/16, H04M 1/02, H04M 1/18

(54) **COVER OF ELECTRONIC DEVICE**
ABDECKUNG EINER ELEKTRONISCHEN VORRICHTUNG
COUVERCLE DE DISPOSITIF ÉLECTRONIQUE

(30) Priority: 06.08.2021 KR 20210104094; 21.12.2021 KR 20210183952
(43) Date of publication of application: 05.06.2024
(73) Proprietor: Samsung Electronics Co., Ltd., Suwon-si, Gyeonggi-do 16677 (KR)
(72) Inventor: CHA, Dokhwan, Suwon-si Gyeonggi-do 16677 (KR); KIM, Jaecheon, Suwon-si Gyeonggi-do 16677 (KR)
(74) Representative: HGF
(86) International application number: PCT/KR2022/011773
(87) International publication number: WO 2023/014205

(56) References cited:
- CN-A- 102 232 689
- CN-U- 205 006 187
- KR-A- 20160 129 374
- KR-A- 20160 129 374
- KR-A- 20170 067 613
- KR-A- 20170 067 613
- KR-B1- 101 319 100
- KR-Y1- 200 480 613
- US-A1- 2010 101 975
- US-A1- 2014 043 741
- US-B2- 8 833 554

## Description

### [Technical Field]

Various embodiments of the disclosure relates to a cover of an electronic device.

### [Background Art]

Recently, users are provided with a diversity of electronic devices, such as mobile phones and e-book readers, which allow users to use various contents. Such electronic devices come equipped with various features, such as photographing, playing music and video, multimedia, and games, as well as wireless transmission/reception. A display unit is provided on the front surface of the electronic device so that the multiple functions may be used. Electronic devices, called smartphones, have a large-size touch-sensitive display unit on the entire surface thereof.

As electronic devices become small and lightweight, users may carry an electronic device in their hand, pocket, or bag and use it while on the move. However, there is a risk of loss and damage due to storage and carrying. Various types of covers are mounted to safely protect electronic devices.

Further, the user may use various functions on the electronic device instead of the computer monitor in a stationary place as well as while on the move. In this case, the display unit of the electronic device may be placed tilted at a predetermined angle from the ground to be suited for the user's eye level and appropriate use angle. To that end, the cover of the electronic device may also have a feature for fixing the electronic device while being inclined at a predetermined angle.

US 8833554 B2 discusses a holding and supporting means to hold an item such as a portable digital device.

### [Detailed Description of the Invention]

### [Technical Problem]

When mounted on the electronic device, the cover may safely protect the electronic device, but may cause the user to drop the electronic device while carrying it.

To add a feature for fixing the electronic device while being inclined at a predetermined angle to the cover, a separate injection-molded material needs to be attached to the cover, which increases the thickness and weight of the electronic device cover.

Various embodiments of the disclosure may provide a cover to which a strap is attached to prevent the user from dropping the electronic device while carrying the electronic device in her hand, thereby providing convenience.

In various embodiments of the disclosure, while using the electronic device cover, the user may fix the electronic device to be inclined at a predetermined angle by the strap attached to the electronic device cover. The stand function is available even without adding a separate injection-molded material. Thus, it is possible to reduce the thickness of the cover of the electronic device.

The disclosure is not limited to the foregoing embodiments but various modifications or changes may rather be made thereto as long as they fall within the scope of the appended claims.

### [Technical Solution]

The invention is set out in the appended set of claims.

### [Advantageous Effects]

According to various embodiments, a strap to which the user's finger may be inserted is attached to the electronic device cover, making the electronic device comfortable to use.

According to various embodiments, even without adding a separate component, it is possible to fix the electronic device while being inclined at a predetermined angle without increasing the thickness of the electronic device cover by a rotatable strap of the electronic device cover and a magnetic coupling between a first magnetic body and a second magnetic body.

### [Brief Description of Drawings]

FIG. 1 is a view illustrating an electronic device in a network environment according to various embodiments;
FIG. 2 is a front perspective view illustrating an electronic device according to various embodiments of the disclosure;
FIG. 3 is a rear perspective view illustrating an electronic device according to various embodiments of the disclosure;
FIG. 4 is an exploded perspective view illustrating an electronic device according to various embodiments of the disclosure;
FIG. 5 is a front view illustrating an electronic device cover according to various embodiments of the disclosure;
FIG. 6 is a rear view illustrating an electronic device cover according to various embodiments of the disclosure;
FIG. 7 is a cross-sectional view schematically illustrating the electronic device cover of FIG. 5, taken along line A-A' according to various embodiments of the disclosure;
FIG. 8 is a bottom side view illustrating an electronic device cover according to various embodiments of the disclosure;
FIG. 9 is a side view illustrating a strap of an electronic device cover according to various embodiments of the disclosure;
FIG. 10 is a view illustrating a first process according to a process for manufacturing a strap of an electronic device cover according to various embodiments of the disclosure;
FIG. 11 is a view illustrating a second process according to a process for manufacturing a strap of an electronic device cover according to various embodiments of the disclosure;
FIG. 12 is a view illustrating a third process according to a process for manufacturing a strap of an electronic device cover according to various embodiments of the disclosure;
FIG. 13 is a view illustrating a fourth process according to a process for manufacturing a strap of an electronic device cover according to various embodiments of the disclosure;
FIG. 14 is a cross-sectional view illustrating a state in which a strap of an electronic device cover is fixed to a first cover according to various embodiments of the disclosure;
FIG. 15 is a view illustrating a method for fixing a strap of an electronic device cover to a first cover according to various embodiments of the disclosure;
FIG. 16 is an enlarged, cross-sectional view illustrating a state in which a strap of an electronic device cover and a first cover are fixed according to various embodiments of the disclosure;
FIG. 17 is a view illustrating a state in which a strap of an electronic device cover is rotated according to various embodiments of the disclosure;
FIG. 18 is a view illustrating a structure of a first injection-molded material of a strap and a structure of a first fixing member corresponding to the first injection-molded material according to various embodiments of the disclosure;
FIG. 19 is a view illustrating a coupling relationship between a first injection-molded material of a strap and a first fixing member according to various embodiments of the disclosure;
FIG. 20 is a view illustrating a coupling relationship between a first injection-molded material of a strap and a first fixing member according to rotation of the strap according to various embodiments of the disclosure;
FIG. 21 is a perspective view illustrating a configuration of a second area of a strap according to various embodiments of the disclosure;
FIG. 22 is a perspective view illustrating a first cover including a second shielding material according to various embodiments of the disclosure;
FIG. 23 is a perspective view illustrating a state in which a strap is inserted into a second cover to stand an electronic device according to various embodiments of the disclosure;
FIG. 24 is a side view illustrating a state in which a strap is inserted into a second cover to stand an electronic device according to various embodiments of the disclosure;
FIG. 25 is a cross-sectional view illustrating a state in which a strap is inserted into a second cover to stand an electronic device according to various embodiments of the disclosure;
FIG. 26 is a side view illustrating a state in which a strap is inserted into a second cover to stand an electronic device according to other embodiments of the disclosure; and
FIG. 27 is a perspective view illustrating a state in which a strap is inserted into a second cover to stand an electronic device according to other embodiments of the disclosure.

### [Mode for Carrying out the Invention]

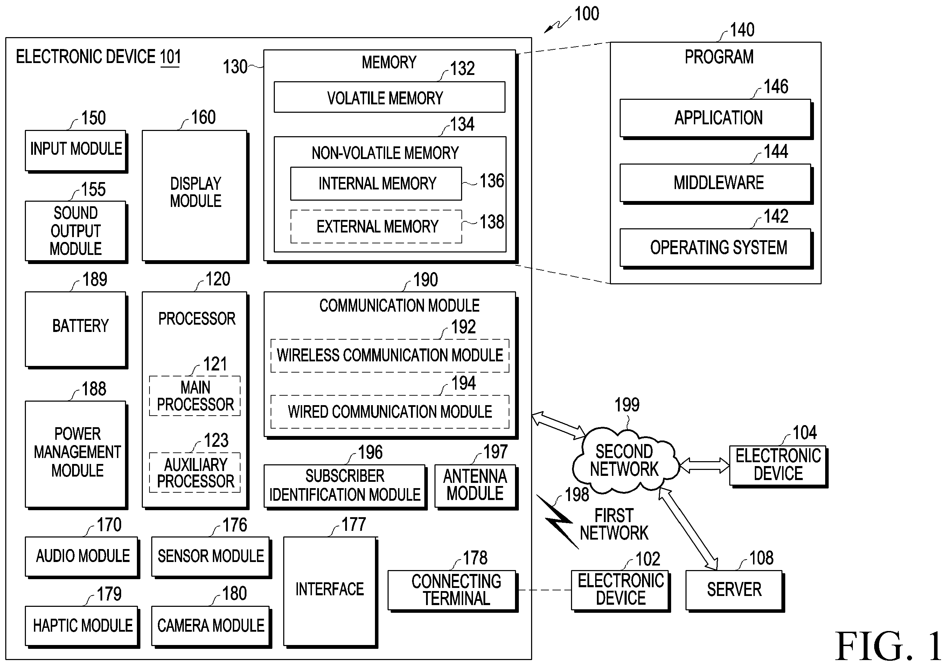

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™} wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

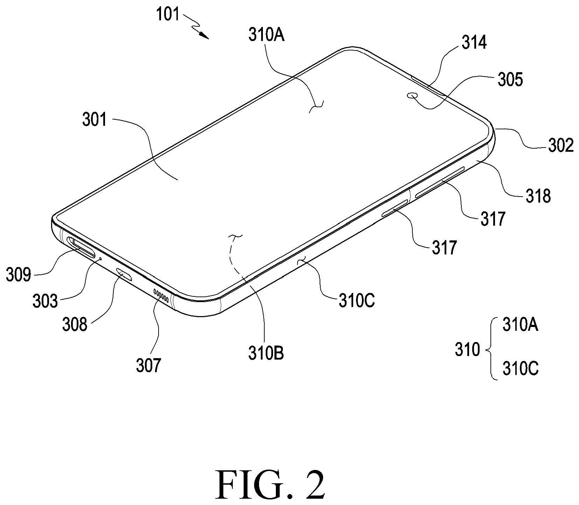

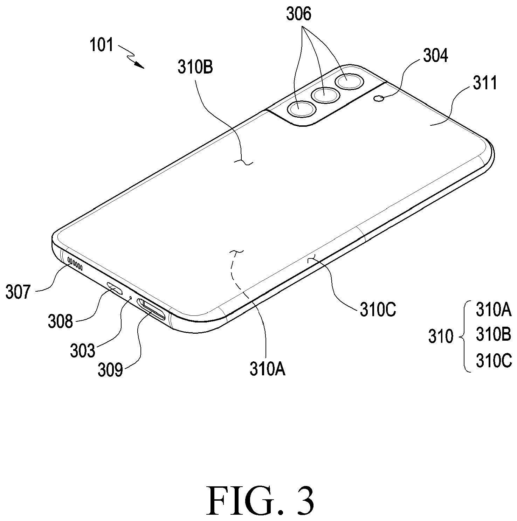

FIG. 2 is a front perspective view illustrating an electronic device 101 according to various embodiments of the disclosure. FIG. 3 is a rear perspective view illustrating an electronic device 101 according to various embodiments of the disclosure.

Referring to FIGS. 2 and 3, according to an embodiment, an electronic device 101 may include a housing 310 with a front surface 310A, a rear surface 310B, and a side surface 310C surrounding a space between the front surface 310A and the rear surface 310B. According to another embodiment (not shown), the housing 310 may denote a structure forming part of the front surface 310A, the rear surface 310B, and the side surface 310C of FIG. 2. According to an embodiment, at least part of the front surface 310A may have a substantially transparent front plate 302 (e.g., a glass plate or polymer plate including various coat layers). The rear surface 310B may be formed by a rear plate 311. The rear plate 311 may be formed of, e.g., glass, ceramic, polymer, metal (e.g., aluminum, stainless steel (STS), or magnesium), or a combination of at least two thereof. The side surface 310C may be formed by a side bezel structure (or a "side member") 318 that couples to the front plate 302 and the rear plate 311 and includes a metal and/or polymer. According to an embodiment, the rear plate 311 and the side bezel plate 318 may be integrally formed together and include the same material (e.g., glass, metal, such as aluminum, or ceramic). According to another embodiment, the front surface 310A and/or the front plate 302 may include a part of the display 301.

According to an embodiment, the electronic device 101 may include at least one of a display 301, audio modules 303, 307, and 314 (e.g., the audio module 170 of FIG. 1), a sensor module (e.g., the sensor module of FIG. 1). 176), camera modules 305 and 306 (e.g., the camera module 180 of FIG. 1), a key input device 317 (e.g., the input module 150 of FIG. 1), and connector holes 308 and 309 (e.g., the connection terminal 178 of FIG. 1). According to an embodiment, the electronic device 101 may exclude at least one (e.g., the connector hole 309) of the components or may add other components. According to an embodiment, the display 301 may be visually revealed through, e.g., a majority portion of the front plate 302.

According to an embodiment, the surface (or the front plate 302) of the housing 310 may include a screen display area formed as the display 301 is visually exposed. For example, the screen display area may include the front surface 310A.

According to another embodiment (not shown), the electronic device 101 may include a recess or opening formed in a portion of the screen display area (e.g., the front surface 310A) of the display 301 and may include at least one or more of an audio module 314, a sensor module (not shown), a light emitting device (not shown), and a camera module 305 aligned with the recess or opening. According to another embodiment (not shown), at least one or more of the audio module 314, sensor module (not shown), camera module 305, fingerprint sensor (not shown), and light emitting device (not shown) may be included on the rear surface of the screen display area of the display 301.

According to another embodiment (not shown), the display 301 may be disposed to be coupled with, or adjacent, a touch detecting circuit, a pressure sensor capable of measuring the strength (pressure) of touches, and/or a digitizer for detecting a magnetic field-type stylus pen.

According to an embodiment, at least a portion of the key input device 317 may be disposed on the side bezel structure 318.

According to an embodiment, the audio modules 303, 307, and 314 may include, e.g., a microphone hole 303 and speaker holes 307 and 314. A microphone for acquiring external sounds may be disposed in the microphone hole 303. **In** some embodiments, a plurality of microphones may be disposed to detect the direction of the sound. The speaker holes 307 and 314 may include an external speaker hole 307 and a phone receiver hole 314. According to an embodiment, the speaker holes 307 and 314 and the microphone hole 303 may be implemented as a single hole, or speakers may be rested without the speaker holes 307 and 314 (e.g., piezo speakers).

According to an embodiment, the sensor modules (not shown) may generate an electrical signal or data value corresponding to an internal operating state or external environmental state of the electronic device 101. The sensor module (not shown) may include, e.g., a first sensor module (not shown) (e.g., a proximity sensor) and/or a second sensor module (not shown) (e.g., a fingerprint sensor) disposed on the front surface 310A of the housing 310. The sensor module (not shown) may include a third sensor module (not shown) (e.g., an HRM sensor) and/or a fourth sensor module (not shown) (e.g., a fingerprint sensor) disposed on the rear surface 310B of the housing 310). According to another embodiment (not shown), the fingerprint sensor may be disposed on the rear surface 310B as well as on the front surface 310A (e.g., the display 301) of the housing 310. The electronic device 101 may further include sensor modules not shown, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor (not shown).

According to an embodiment, the camera modules 305 and 306 may include a front camera module 305 disposed on the first surface 310A of the electronic device 101 and a rear camera module 306 and/or a flash 304 disposed on the rear surface 310B. The camera modules 305 and 306 may include one or more lenses, an image sensor, and/or an image signal processor. The flash 304 may include, e.g., a light emitting diode (LED) or a xenon lamp. According to an embodiment, two or more lenses (an infrared (IR) camera, a wide-angle lens, and a telescopic lens) and image sensors may be disposed on one surface of the electronic device 101.

According to an embodiment, the key input device 317 may be disposed on the side surface 310C of the housing 310. According to another embodiment, the electronic device 101 may exclude all or some of the above-mentioned key input devices 317 and the excluded key input devices 317 may be implemented in other forms, e.g., as soft keys, on the display 301.

According to an embodiment, the light emitting device may be disposed on, e.g., the front surface 310A of the housing 310. The light emitting device (not shown) may provide, e.g., information about the state of the electronic device 101 in the form of light. According to another embodiment, the light emitting device (not shown) may provide a light source that interacts with, e.g., the front camera module 305. The light emitting device (not shown) may include, e.g., a light emitting diode (LED), an infrared (IR) LED, and/or a xenon lamp.

According to an embodiment, the connector holes 308 and 309 may include a first connector hole 308 for receiving a connector (e.g., an earphone jack) for transmitting/receiving audio signals to/from an external electronic device or a connector (e.g., a USB connector) for transmitting/receiving power and/or data to/from the external electronic device and/or a second connector hole 309 for receiving a storage device (e.g., a subscriber identification module (SIM) card). According to an embodiment, the first connector hole 308 and/or the second connector hole 309 may be omitted.

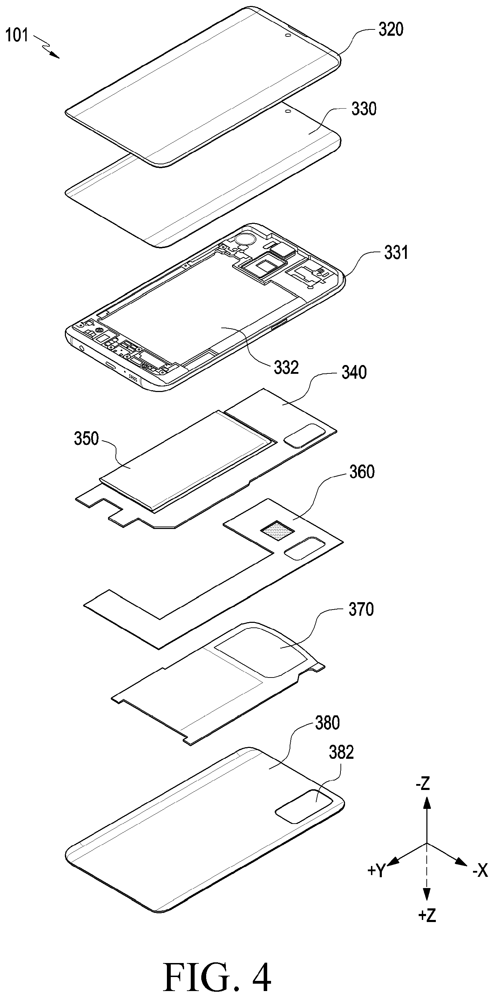

FIG. 4 is an exploded perspective view illustrating an electronic device according to various embodiments of the disclosure.

Referring to FIG. 4, an electronic device 101 (e.g., the electronic device 101 of FIGS. 2 and 3) may include at least one of a front plate 320 (e.g., the front plate 302), a display 330 (e.g., the display 301 of FIG. 2), a first supporting member 332 (e.g., a bracket), a printed circuit board 340, a battery 350, a second supporting member 360 (e.g., a rear case), an antenna 370, and a rear plate 380. According to an embodiment, the electronic device 101 may exclude at least one (e.g., the first supporting member 332 or the second supporting member 360) of the components or may add other components. At least one of the components of the electronic device 101 may be the same or similar to at least one of the components of the electronic device 101 of FIG. 2 or 3 and no duplicate description is made below.

According to an embodiment, the first supporting member 332 may be disposed inside the electronic device 101 to be connected with the side bezel structure 331 or integrated with the side bezel structure 331. The first supporting member 332 may be formed of, e.g., a metallic material and/or non-metallic material (e.g., polymer). The display 330 may be joined onto one surface of the first supporting member 332, and the printed circuit board 340 may be joined onto the opposite surface of the first supporting member 311. A processor, memory, and/or interface may be mounted on the printed circuit board 340. The processor may include one or more of, e.g., a central processing unit, an application processor, a graphic processing device, an image signal processing, a sensor hub processor, or a communication processor. According to an embodiment, the memory may include, e.g., a volatile or non-volatile memory. According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector. According to an embodiment, the battery 350 (e.g., the battery 189 of FIG. 1) may be a device for supplying power to at least one component (e.g., the camera module 312) of the electronic device 101. The battery 189 may include, e.g., a primary cell which is not rechargeable, a secondary cell which is rechargeable, or a fuel cell. At least a portion of the battery 350 may be disposed on substantially the same plane as the printed circuit board 340. The battery 350 may be integrally or detachably disposed inside the electronic device 101.

According to various embodiments, the second supporting member 360 (e.g., a rear case) may be disposed between the printed circuit board 340 and the antenna 370. For example, the second supporting member 360 may include one surface to which at least one of the printed circuit board 340 and the battery 350 is coupled, and another surface to which the antenna 370 is coupled.

According to an embodiment, the antenna 370 may be disposed between the rear plate 380 and the battery 350. The antenna 370 may include, e.g., a near-field communication (NFC) antenna, a wireless charging antenna, and/or a magnetic secure transmission (MST) antenna. The antenna 370 may perform short-range communication with, e.g., an external device or may wirelessly transmit or receive power necessary for charging. For example, the antenna 370 may include a coil for wireless charging. According to an embodiment of the present invention, an antenna structure may be formed by a portion or combination of the side bezel structure 331 and/or the first supporting member 332.

According to various embodiments, the electronic device 101 may include a camera module (e.g., the camera module 306 of FIG. 3) disposed in the housing (e.g., the housing 310 of FIG. 2). According to an embodiment, the camera module 306 may be disposed on the first supporting member 332 and may be a rear camera module (e.g., the camera module 312 of FIG. 3) capable of obtaining an image of a subject positioned behind (e.g., the +Z direction) of the electronic device 101. According to an embodiment, at least a portion of the camera module 312 may be visually exposed to the outside of the electronic device 101 through the opening 382 formed in the rear plate 380.

The electronic device 101 disclosed in FIGS. 2 to 4 has a bar-type or plate-type appearance but the disclosure is not limited thereto. For example, the illustrated electronic device may be a rollable electronic device or a foldable electronic device. "Rollable electronic device" may mean an electronic device at least a portion of which may be wound or rolled or received in a housing (e.g., the housing 310 of FIG. 2) as the display (e.g., the display 330 of FIG. 3) may be bent and deformed. As the display is stretched out or is exposed to the outside in a larger area according to the user's need, the rollable electronic device may use an expanded second display area. "Foldable electronic device" may mean an electronic device that may be folded in directions to face two different areas of the display or in directions opposite to each other. **In** general, in the portable state, the foldable electronic device may be folded so that the two different areas of the display face each other or face away from each other and, in an actual use state, the user may unfold the display so that the two different areas form a substantially flat shape. **In** some embodiments, according to various embodiments of the disclosure, the electronic device 101 may include various electronic devices, such as a laptop computer or a camera, as well as a portable electronic device, such as a smart phone.

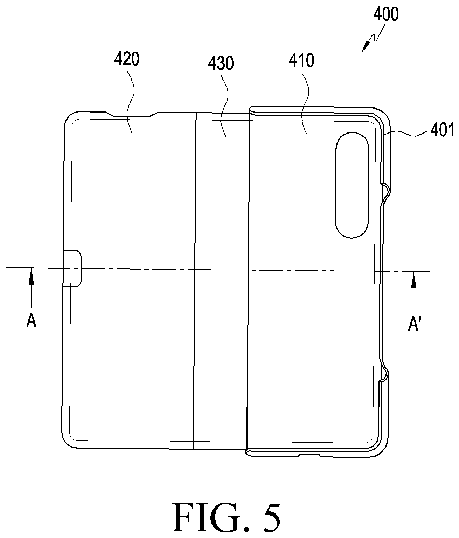

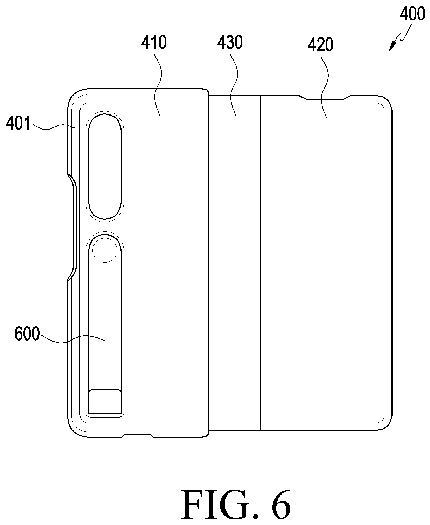

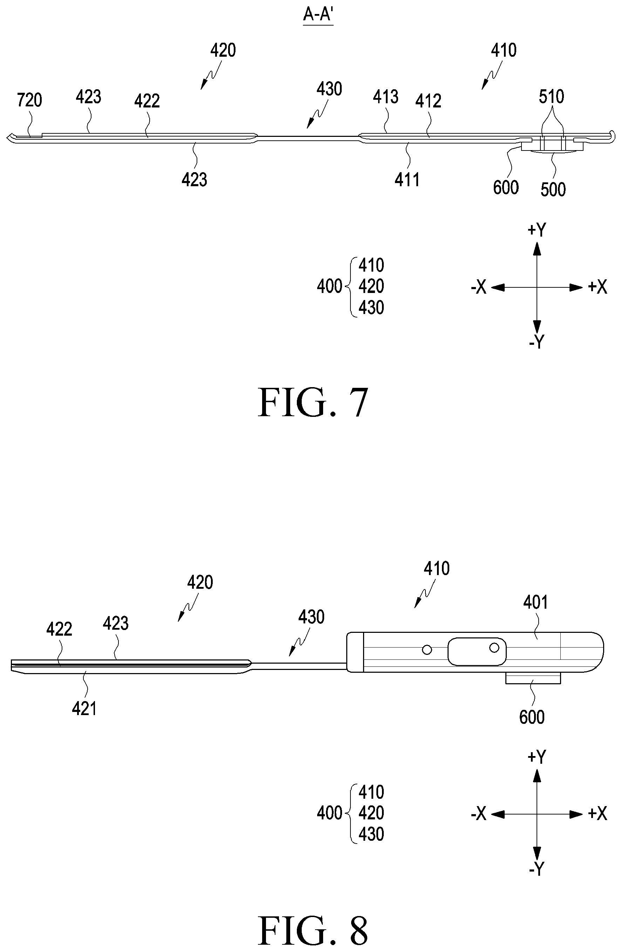

FIG. 5 is a front view illustrating an electronic device cover 400 according to various embodiments of the disclosure. FIG. 6 is a rear view illustrating an electronic device cover 400 according to various embodiments of the disclosure. FIG. 7 is a cross-sectional view schematically illustrating the electronic device cover 400 of FIG. 5, taken along line A-A' according to various embodiments of the disclosure. FIG. 8 is a bottom side view illustrating an electronic device cover 400 according to various embodiments of the disclosure.

Referring to FIGS. 5, 6, 7, and 8, an electronic device cover 400 includes a first cover 410, a second cover 420 rotatably connected to the first cover 410, a hinge cover 430 connecting the first cover 410 and the second cover 420, and a strap 600 disposed on the rear surface of the first cover 410.

In FIGS. 7, and 8, "X" may mean the length direction of the electronic device cover 400. "Y" may mean the width direction of the electronic device cover 400. Further, in an embodiment of the disclosure, '+X' may mean the right direction of the electronic device, and '-X' may mean the left direction of the electronic device. '+Y' may mean the upper direction of the electronic device, and '-Y' may mean the lower direction of the electronic device.

According to various embodiments, the electronic device cover 400 may safely protect the electronic device (e.g., the electronic device 101 of FIGS. 1 to 4) from an external impact. The electronic device cover 400 may be attached to fix the electronic device 101, and may be detached if necessary.

According to various embodiments, the first cover 410 for fixing the electronic device 101 may cover one surface of the electronic device 101 that faces in the lower direction (e.g., the -Y-axis direction). According to an embodiment, the first cover 410 may include a cradle 401 for fixing the electronic device 101 to the first cover 410. The cradle 401 may be positioned along the edge of the first cover 410, may protrude in the upper direction (e.g., the +Y-axis direction) of the first cover 410, and the inner surface of the cradle 401 may correspond to the shape of the electronic device 101. The user may insert the electronic device 101 into the cradle 401 to fix the electronic device 101 to the cover 400 of the electronic device.

According to various embodiments, the first cover 410 may include a 1-1th cover fabric 411, a 1-2th cover fabric 412 disposed on the upper surface of the 1-1th cover fabric 411, and a 1-3th cover fabric 413 disposed on the upper surface of the 1-2th cover fabric 412. According to an embodiment, the 1-1th cover fabric 411 and/or the 1-3th cover fabric 413 are portions that form the exterior of the electronic device cover 400, and various colors and/or materials may be selected according to the manufacturer's choice. For example, the 1-1th cover fabric 411 and/or the 1-3th cover fabric 413 may be formed of leather, cloth, and/or vinyl. According to an embodiment, a hard material may be selected for the 1-2th cover fabric 412 to fix and/or cover the electronic device 101. For example, the 1-2th cover fabric 412 may be a hard material such as plastic, carbon fiber, glass fiber, and/or metal. For example, the strength (e.g., tensile strength) of the 1-1th cover fabric 411 and/or the 1-3th cover fabric 413 may be lower than the strength (e.g., tensile strength) of the 1-2th cover fabric 412.

According to various embodiments, the hinge cover 430 connecting the first cover 410 and the second cover 420 may be formed to extend from the first cover 410 in the length direction (e.g., the X-axis direction). The hinge cover 430 may cover one side surface of the electronic device. The hinge cover 430 may be connected so that the second cover 420 is rotatable about the first cover 410. For example, the second cover 420 may rotate 360° about the first cover 410. According to an embodiment, the hinge cover 430 may use a third cover fabric. According to an embodiment, the third cover fabric may be formed of a non-hard material (e.g., leather, cloth, and/or vinyl) for easy rotation in order to rotatably connect the first cover 410 and the second cover 420. The third cover fabric may be formed to extend in the length direction from the 1-1th cover fabric 411 of the first cover 410. The third cover fabric may be, e.g., the same fabric as the 1-1th cover fabric 411.

According to various embodiments, the second cover 420 rotatably connected to the first cover 410 may be formed to extend in the length direction from the hinge cover 430. The second cover 420 may cover one surface (e.g., the surface on which the display is disposed) of the electronic device facing in the upper direction (e.g., the +Y-axis direction). According to an embodiment, the second cover 420 may serve as a stand for the user to use the electronic device with the electronic device placed at a predetermined angle.

According to various embodiments, the second cover 420 may include a 2-1th cover fabric 421, a 2-2th cover fabric 422 disposed on the upper surface of the 2-1th cover fabric 421, and a 2-3th cover fabric 423 disposed on the upper surface of the 2-2th cover fabric 422. According to an embodiment, the 2-1th cover fabric 421 and/or the 2-3th cover fabric 423 are portions that form the exterior of the electronic device cover 400, and various colors and/or materials may be selected according to the manufacturer's choice. For example, the 2-1th cover fabric 421 and/or the 2-3th cover fabric 423 may be formed of leather. According to an embodiment, the 2-1th cover fabric 421 may be formed to extend in the length direction from the third cover fabric of the hinge cover 430. The 2-1th cover fabric 421 may be, e.g., the same fabric as the 1-1th cover fabric 411 and/or the third cover fabric. According to an embodiment, a hard material may be selected for the 2-2th cover fabric 422 to fix the electronic device. For example, the 2-2th cover fabric 422 may be a hard material such as plastic, carbon fiber, glass fiber, and/or metal.

The second cover 420 includes a second magnetic body 720. Referring to FIG. 7, the second magnetic body 720 is positioned at an end portion of the second cover 420. For example, the second magnetic body 720 may be positioned at a left edge portion (e.g., an edge portion in the -X-axis direction) of the second cover 420. For example, the second magnetic body 720 may be disposed at an intermediate point in the width direction (Y-axis) of the second cover 420. The second magnetic body 720 is configured to be magnetically coupled to the first magnetic body 710 to be described below. The second magnetic body 720 may be a magnet or a magnetic object. For example, it may be metal.

According to various embodiments, the strap 600 may be connected to the rear surface of the first cover 410. The strap 600 may be positioned at a right edge portion (e.g., an edge portion in the +X-axis direction) of the first cover 410 to facilitate rotation and bending of the strap 600. One end of the strap 600 may be fixed to the first cover 410 and may be formed to extend enough to insert the user's finger into the strap 600. According to an embodiment, one end of the strap 600 fixed to the first cover 410 and the second magnetic body 720 positioned on the second cover 420 may be positioned on the same y-axis coordinate. Details of the structure and manufacturing process of the strap 600 are described below.

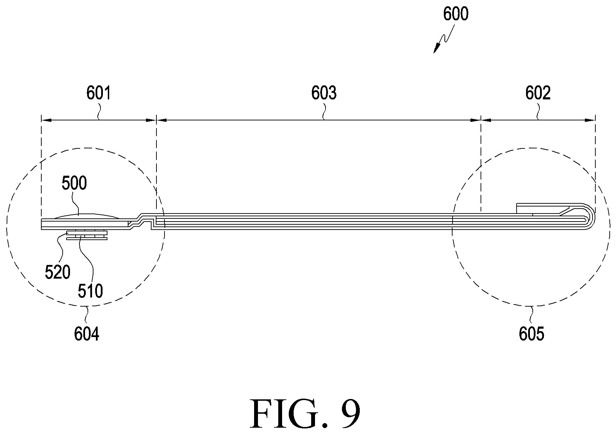

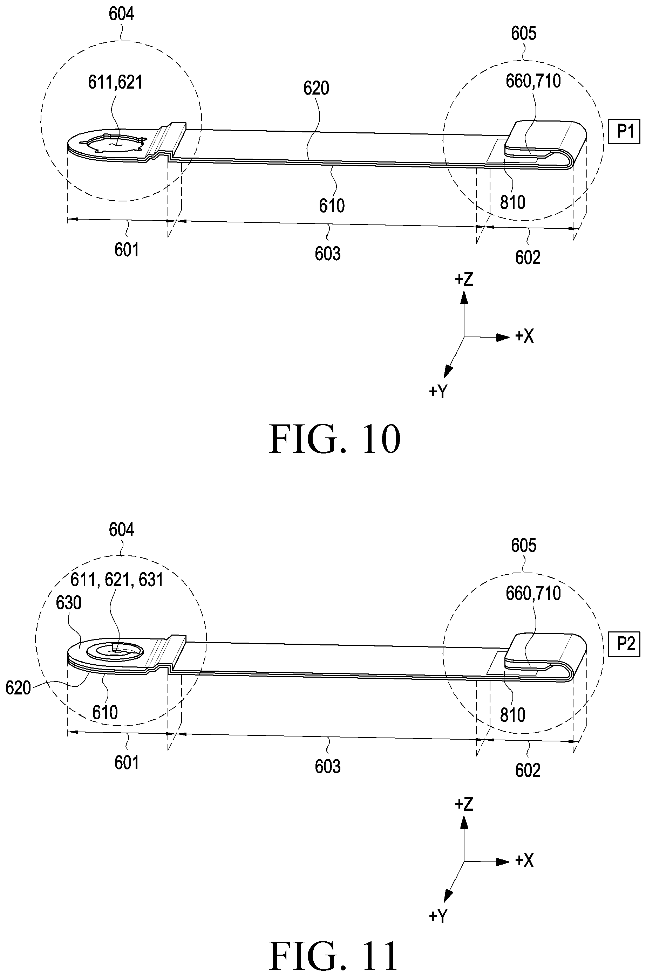

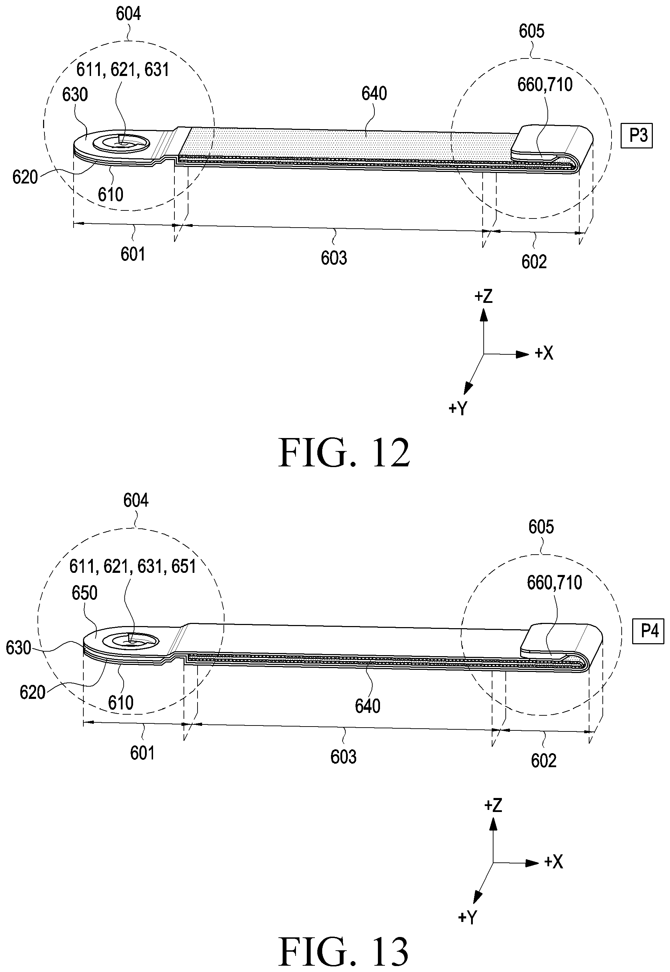

FIG. 9 is a side view illustrating an electronic device cover 400 according to various embodiments of the disclosure. FIGS. 10, 11, 12, and 13 are views sequentially illustrating a process of manufacturing a strap 600 of an electronic device cover 400. FIG. 10 is a view illustrating a first process according to a process for manufacturing a strap 600 of an electronic device cover 400 according to various embodiments of the disclosure. FIG. 11 is a view illustrating a second process according to a process for manufacturing a strap 600 of an electronic device cover 400 according to various embodiments of the disclosure. FIG. 12 is a view illustrating a third process according to a process for manufacturing a strap 600 of an electronic device cover 400 according to various embodiments of the disclosure. FIG. 13 is a view illustrating a fourth process according to a process for manufacturing a strap 600 of an electronic device cover 400 according to various embodiments of the disclosure.

Referring to FIGS. 9, 10, 11, 12, and 13, the strap 600 is divided into a first area 601, a second area 602, and a third area 603. The strap 600 may include a first fabric 610, a second fabric 620, a first injection-molded material 630, a third fabric 640, and a fourth fabric 650. The configuration of the strap 600 of FIGS. 9, 10, 11, 12, and 13 may be identical in whole or part to the configuration of the strap 600 of FIG. 6.

In FIGS. 9, 10, 11, 12, and 13, "X" may mean the length direction of the electronic device cover 400. "Y" may mean the width direction of the electronic device cover 400. "Z" may mean the thickness direction of the electronic device cover 400. Further, in an embodiment of the present invention, '+X' may mean the right direction of the electronic device cover 400, and '-X' may mean the left direction of the electronic device cover 400. '+Y' may mean the front direction of the electronic device cover 400, and '-Y' may mean the rear direction of the electronic device cover 400. +Z' may mean the upper direction of the electronic device cover 400, and '-Z' may mean the lower direction of the electronic device cover 400.

Referring to FIG. 9, the strap 600 is divided into a first area 601, a second area 602, and a third area 603. The first area 601 includes a first end portion 604 that fixes the strap 600 to the first cover 410 and is rotatably connected to the first cover 410. The second area 602 includes a second end portion 605 formed to be at least partially bendable. The second end 605 is bent, but may be unfolded at a predetermined angle by an external force (e.g., the user's force). However, when the external force is removed, it has elasticity by which it may return to the bent shape. The third area 603 may be positioned between the first area 601 and the second area 602 to connect the first area 601 and the second area 602.

The second area 602 includes a first magnetic body 710. The first magnetic body 710 is disposed at the second end portion 605. The first magnetic body 710 is configured to be magnetically coupled to the second magnetic body 720 of the second cover 420. The first magnetic body 710 may be a magnet or a magnetic object. For example, it may be metal.

According to various embodiments, the process of manufacturing the strap 600 of the electronic device cover 400 is as follows. According to various embodiments, according to the first process P1, referring to FIG. 10, the strap 600 may include a first fabric 610 and a second fabric 620 disposed on the first fabric 610. According to various embodiments, the first fabric 610 may include a first hole 611 in the first area 601. The second fabric 620 may include, in the first area 601, a second hole 621 having the same shape as the first hole 611. According to an embodiment, one end portion of the first area 601 connected to the second area 602 may not be formed flat in the length direction (X-axis direction), but may have at least a portion protruding in the upper direction (e.g., +Z direction). According to various embodiments, the first fabric 610 and/or the second fabric 620 may extend to the third area 603 connected to the first area and the second area 602 connected to the third area 603. In the second area 602 including the second end portion 605 of the first fabric 610 and/or the second fabric 620, at least a portion of the first fabric 610 and/or the second fabric 620 may be bent in the upper direction (e.g., the +Z direction), and the first fabric 610 and/or the second fabric 620 bent in the upper direction (e.g., the +Z direction) may be bent in the left direction (e.g., the -X direction).

According to various embodiments, the first fabric 610 and the second fabric 620 may be compressed and attached using an adhesive such as a glue or hot melt. Hot melt is a thermal melting adhesive that is applied to a fabric in a liquid state at high temperature using a thermoplastic resin without using water or solvent, and exerts adhesion as it is cooled and solidified after compression.

According to various embodiments, the second injection-molded material 660, the first magnetic body 710, and the first shielding material 810 may be disposed between the first fabric 610 and/or the second fabric 620. A detailed description of them is given below.

According to various embodiments, according to the second process P2, referring to FIG. 11, the first injection-molded material 630 may be disposed on the first area 601 of the second circular end. The shape of the first injection-molded material 630 may correspond to the shape of the first area 601 of the first fabric 610 and/or the second fabric 620. The first injection-molded material 630 may include a third hole 631 which is a position corresponding to the position of the first hole 611 and/or the second hole 621. The first injection-molded material 630 may be fixed to the first cover 410 and may be disposed between fabrics to harden the first area 601 connected to rotate. The shape and structure of the first injection-molded material 630 are described below.

According to various embodiments, the second fabric 620 and the first injection-molded material 630 may be compressed and attached using an adhesive such as a glue or hot melt.

According to various embodiments, according to the third process P3, referring to FIG. 12, the third fabric 640 may be disposed on at least a portion of the second area 602 and the third area 603 of the second fabric. Unlike the first fabric 610 and the second fabric 620, the third fabric 640 may be formed to be flat. For example, it may not extend to the bent second end portion 605 of the second area 602. The third fabric 640 may be formed of two layers by folding one fabric to the same length, and may be a 'U'-shaped fabric which has one end bonded to the protruding portion of the first area 601 and the other end where the two layers of fabric are stacked one over the other. The user may insert her hand through the third fabric 640 and use it as the strap 600.

According to various embodiments, the second fabric 620 and the third fabric 640 may be compressed and attached using an adhesive such as a glue or hot melt.

According to various embodiments, according to the fourth process P4, referring to FIG. 13, the fourth fabric 650 may be disposed on the first injection-molded material 630 and the third fabric 640. The fourth fabric 650 may extend from the first area 601 to at least a portion of the third area 603 connected to the first area 601 and the second area 602 connected to the third area 603. However, it may not extend to the bent second end portion 605 of the second area 602. The fourth fabric 650 may include a fourth hole 651 at a position corresponding to the first hole 611, the second hole 621, and/or the third hole 631.

According to various embodiments, the first injection-molded material 630, the third fabric 640, and the fourth fabric 650 may be compressed and attached using an adhesive such as a glue or hot melt.

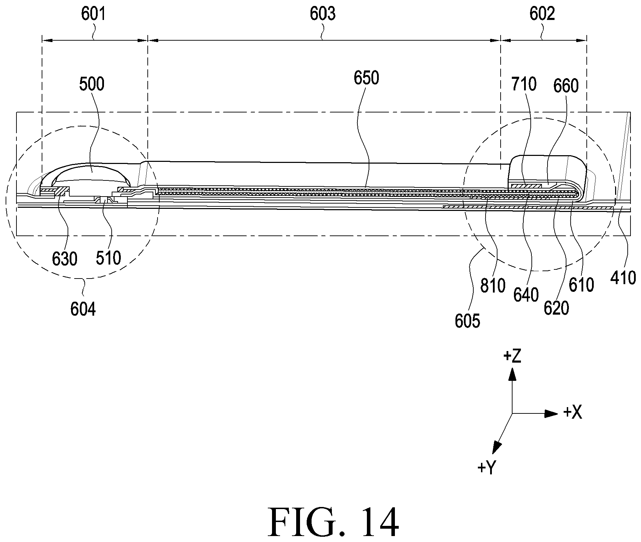

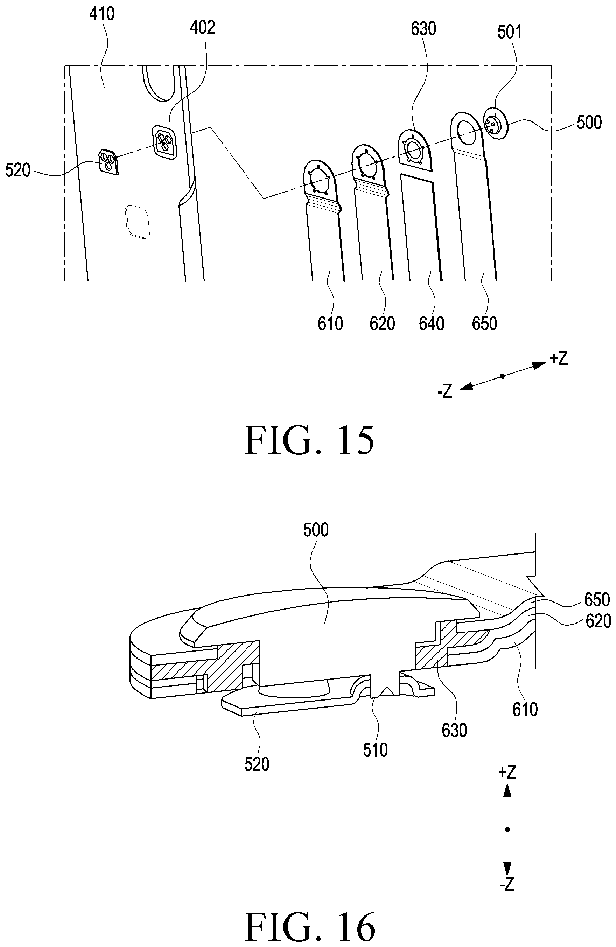

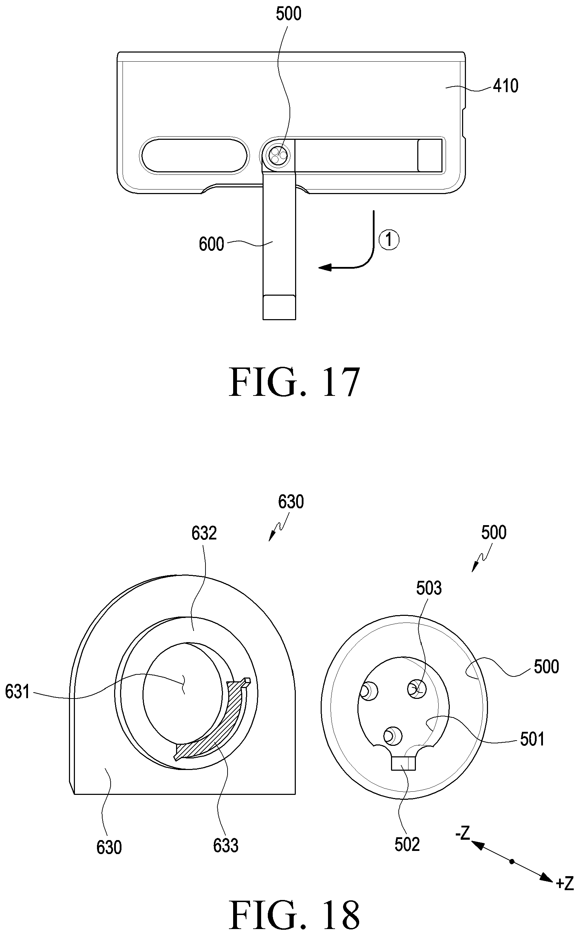

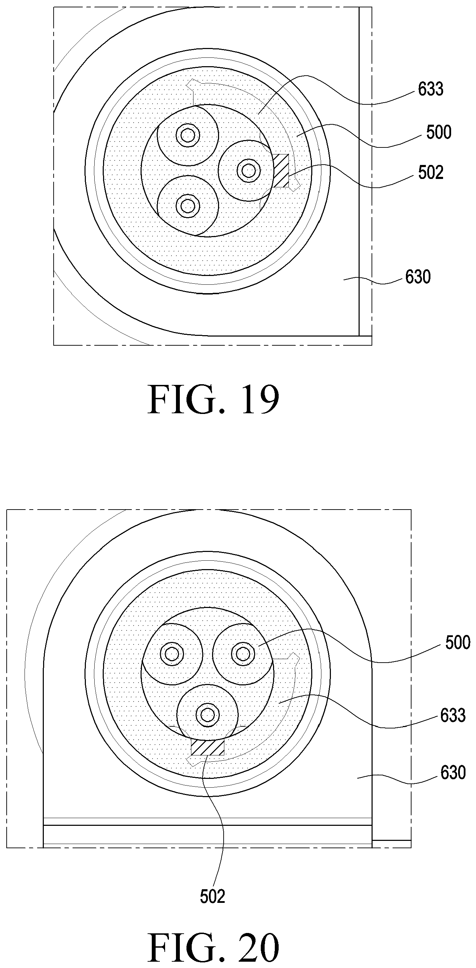

FIG. 14 is a cross-sectional view illustrating a state in which a strap 600 of an electronic device cover 400 is fixed to a first cover 410 according to various embodiments of the disclosure. FIG. 15 is a view illustrating a method for fixing a strap 600 of an electronic device cover 400 to a first cover 410 according to various embodiments of the disclosure. FIG. 16 is an enlarged, cross-sectional view illustrating a state in which a strap 600 of an electronic device cover 400 and a first cover 410 are fixed according to various embodiments of the disclosure. FIG. 17 is a view illustrating a state in which a strap 600 of an electronic device cover 400 is rotated according to various embodiments of the disclosure. FIG. 18 is a view illustrating a structure of a first injection-molded material 630 of a strap 600 and a structure of a first fixing member 500 corresponding to the first injection-molded material 630 according to various embodiments of the disclosure. FIG. 19 is a view illustrating a coupling relationship between a first injection-molded material 630 of a strap 600 and a first fixing member 500 according to various embodiments of the disclosure. FIG. 20 is a view illustrating a coupling relationship between a first injection-molded material 630 of a strap 600 and a first fixing member 500 according to rotation of the strap 600 according to various embodiments of the disclosure.

In FIGS. 14, 15, 16, 17, 18, 19, and 20, "Z" may mean the thickness direction of the electronic device cover 400. Further, in an embodiment of the present invention, '+Z' may mean the upper direction of the electronic device cover 400, and '-Z' may mean the lower direction of the electronic device cover 400.

The first area 601 of the strap 600 includes a first end portion 604 rotatably connected to the first cover 410. As described above, the first end portion 604 of the strap 600 may include a first fabric 610, a second fabric 620, a first injection-molded material 630, and a fourth fabric 650.

According to various embodiments, the electronic device cover 400 may include a first fixing member 500 and a second fixing member 520 for fixing the first cover 410 and the strap 600. The first fixing member 500 may be disposed on the fourth fabric 650. The first fixing member 500 may include a first protrusion 501 at least partially protruding in the lower direction (e.g., in the -Z direction). According to an embodiment, a plurality of first holes 503 are formed in the protrusion of the first fixing member 500. For example, three holes may be formed at constant intervals.

According to various embodiments, the first cover 410 may be disposed in the lower direction (e.g., -Z direction) of the first fabric, and the second fixing member 520 may be disposed in the lower direction (e.g., -Z direction) of the first cover 410. According to an embodiment, the portion 402 in which the first cover 410 contacts the protrusion of the first fixing member 500 and/or the second fixing member 520 may have a plurality of second holes corresponding to the plurality of first holes of the first fixing member 500. For example, three holes having constant intervals corresponding to a plurality of first holes of the first fixing member 500 may be formed.

According to various embodiments, the first protrusion 501 of the first fixing member 500 may contact the first cover 410 through the fourth hole 651 of the fourth fabric 650, the third hole 631 of the first injection-molded material, the second hole 621 of the second fabric 620, and the first hole 611 of the first fabric 610. Referring to FIG. 16, the protrusion of the first fixing member 500 may pass through the strap 600 to contact the first cover 410 and/or the second fixing member 520 to fix the first cover 410 and the strap 600 by riveting a plurality of screws to the plurality of holes of the first fixing member 500, the first cover 410, and/or the second fixing member 520. However, the method for coupling the strap 600 and the first cover 410 is not limited to the above-described embodiment, and various changes in design may be made as necessary.

Referring to FIG. 17, the strap 600 is fixed to the first cover 410 and may rotate. According to an embodiment, the strap 600 may rotate in at least the first direction ①. According to an embodiment, the strap 600 may rotate at least in the first direction ① at a designated angle. For example, it may rotate 90° in the first direction ①. When the first magnetic body 710 positioned at the second end portion 605 of the strap 600 is rendered to face the electronic device by rotating in a direction opposite to the first direction ① or rotating at a designated angle or more, the performance of the electronic device may be weakened, and thus the rotation angle is limited. Hereinafter, a structure of the first injection-molded material 630 and/or the first fixing member 500 corresponding to the first injection-molded material 630 for limiting the rotation direction and the rotation angle of the strap 600 is described.

According to various embodiments, the first injection-molded material 630 may further include a ring-shaped second protrusion 632 surrounding the third hole 631. The second protrusion 632 may be formed to protrude in the upper direction (e.g., the +Z direction). According to an embodiment, the first injection-molded material 630 may include a concave portion in which at least a portion of the second protrusion 632 is formed to be concave in the lower direction (e.g., the -Z direction). The concave portion 633 may be formed to be concave from one point of the second protrusion 632 to a point extending by 1/4 along the entire ring shape (e.g., an area rotated by 90° with respect to the central axis of the ring-shaped second protrusion 632).

According to various embodiments, the first fixing member 500 may include a first protrusion 501 corresponding to the third hole 631 of the first injection-molded material and protruding in the lower direction (e.g., in the -Z direction). The first protrusion 501 may include a directional member 502 for controlling the rotation direction of the strap 600. The first protrusion 501 may be formed to protrude to a size corresponding to the third hole 631 of the first injection-molded material 630, but the directional member 502 of the first protrusion 501 may be formed to protrude beyond the outer circumferential surface corresponding to the third hole 631. The directional member 502 may correspond to the concave portion of the first injection-molded material 630.

According to various embodiments, the first protrusion 501 of the first fixing member 500 may pass through the third hole 631 of the first fixing member 500, and the directional member 502 may be disposed to contact the concave portion of the first fixing member 500. When the strap 600 including the first injection-molded material 630 rotates, the directional member 502 may move only within the area in which the concave portion is formed. Accordingly, the rotation direction and the rotation angle of the strap 600 may be limited.

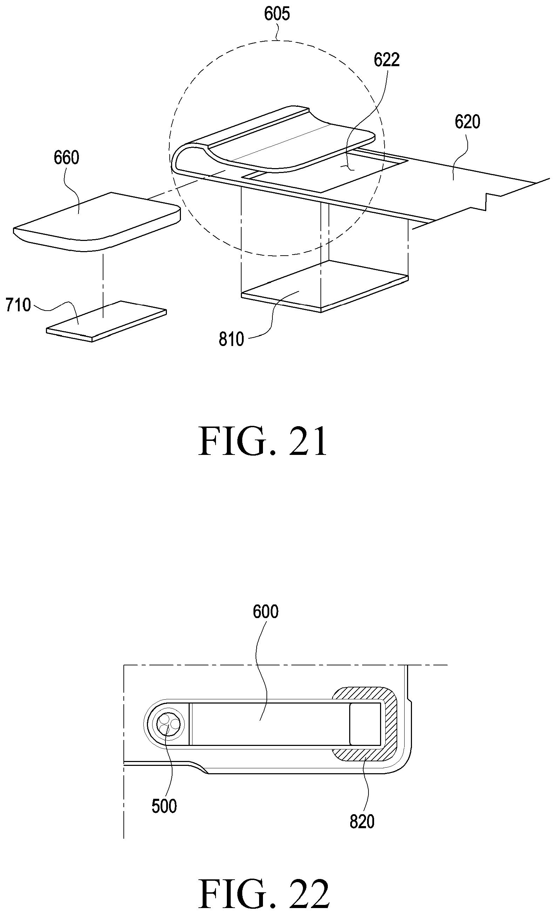

FIG. 21 is a perspective view illustrating a configuration of a second area 602 of a strap 600 according to various embodiments of the disclosure. FIG. 22 is a perspective view illustrating a first cover 410 including a second shielding material 820 according to various embodiments of the disclosure.

According to various embodiments, in the second area 602 of the strap 600, a second injection-molded material 660 and a first magnetic body 710 may be included between the first fabric 610 and the second fabric 620 constituting the second end portion 605. The first magnetic body 710 is attached to a lower end of the second injection-molded material 660, and the second injection-molded material 660 maintains and hardens the shape of the second end 605 to make it convenient for the user to use.

According to various embodiments, the second end portion 605 of the second fabric 620 is bent, and at least a portion thereof may be formed of two layers by the bending portion. A fifth hole 622 may be included at a position corresponding to a portion where the first magnetic body 710 is positioned in the second area 602 of the second fabric 620. According to various embodiments, the first shielding material 810 may be disposed in the fifth hole 622 of the second fabric 620. The first shielding material 810 is to prevent the performance of the electronic device from being weakened due to the first magnetic body 710 between the first magnetic body 710 and the electronic device.

According to various embodiments, the first magnetic body 710 and the first shielding material 810 may be magnetically coupled to each other. The first magnetic body 710 and the first shielding material 810 may face each other, and the bending shape of the second end 605 may be maintained according to the attractive force of the first magnetic body 710 and the first shielding material 810.

According to various embodiments, referring to FIG. 22, the first cover 410 may include the second shielding material 820 at a position corresponding to the position of the first magnetic body 710 included in the non-rotated strap 600. The second shielding material 820 may be positioned on the inner surface of the first cover 410. For example, it may be disposed between the cradle 401 of the first cover 410 and the fabric. The second shielding material 820, together with the first shielding material 810, is to reduce an adverse effect of the first magnetic body 710 on the electronic device.

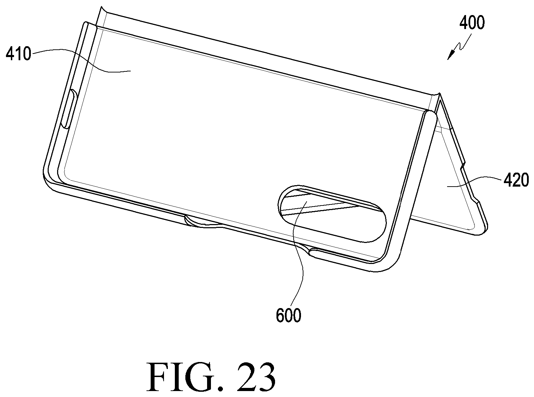

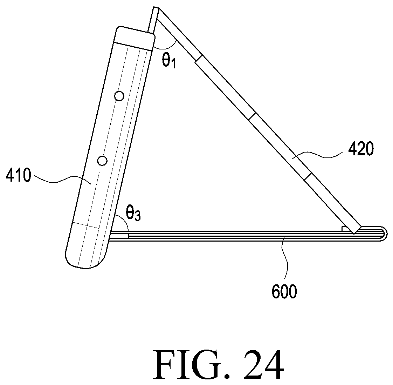

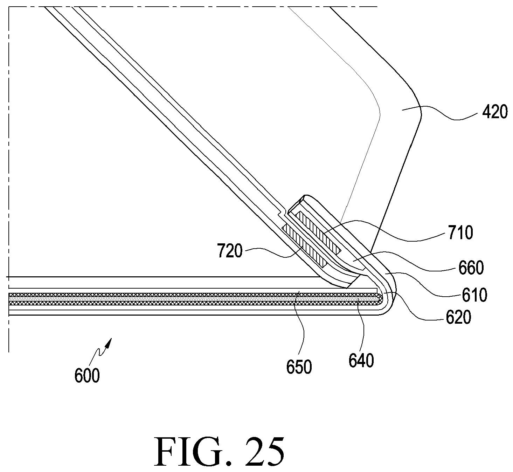

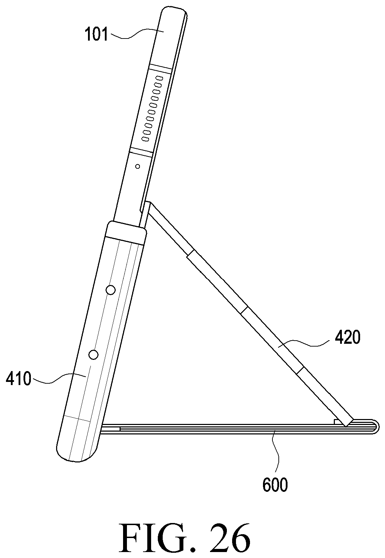

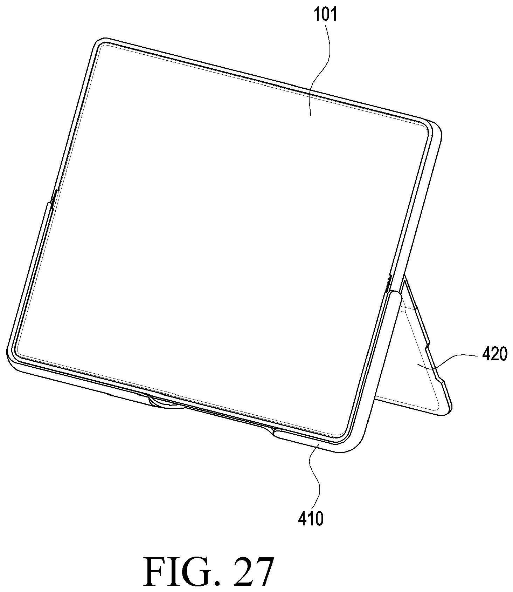

FIG. 23 is a perspective view illustrating a state in which a strap 600 is inserted into a second cover 420 to stand an electronic device according to various embodiments of the disclosure. FIG. 24 is a side view illustrating a state in which a strap 600 is inserted into a second cover 420 to stand an electronic device according to various embodiments of the disclosure. FIG. 25 is a cross-sectional view illustrating a state in which a strap 600 is inserted into a second cover 420 to stand an electronic device according to various embodiments of the disclosure. FIG. 26 is a side view illustrating a state in which a strap 600 is inserted into a second cover 420 to stand an electronic device according to other embodiments of the disclosure. FIG. 27 is a perspective view illustrating a state in which a strap 600 is inserted into a second cover 420 to stand an electronic device according to other embodiments of the disclosure.

According to various embodiments, the user may tilt the electronic device with the electronic device cover 400 at a designated angle according to the user's eye level without additionally mounting a separate component. The user may rotate the second cover 420 about the first cover 410 at a first angle θ1. The user may rotate the strap 600 connected to the first cover 410 at a second angle θ2. The second angle θ2 may be, e.g., 90°. The user may bend the second area 602 and the third area 603 of the strap 600 rotated at the second angle θ2, at the third angle θ3. The user may place the strap 600 rotated at the second angle θ2 on the ground, unfold the bending portion of the second end portion 605 of the strap 600 by an external force (e.g., a force of the user), and insert the end portion of the second cover 420 through the bending portion. The first magnetic body 710 positioned at the second end portion 605 of the strap 600 and the second magnetic body 720 positioned at the end portion 420 of the second cover 420 may be magnetically coupled to each other to fix the position. The user may use the electronic device in a state of being inclined at the third angle θ3 from the ground.

A cover of an electronic device according to the invention is disclosed in claim 1.

According to various embodiments, the cover may further comprise a hinge cover connecting the first cover and the second cover.

According to various embodiments, the first cover may include a cradle positioned along an edge of the first cover and including an inner surface corresponding to a shape of the electronic device.

According to various embodiments, the strap may be rotatable at a designated angle and in a designated direction.

According to various embodiments, the strap may include a first fabric including a first hole, a second fabric disposed on the first fabric and including a second hole, a first injection-molded material disposed on the first area of the second fabric and including a third hole, a third fabric disposed on the second area and the third area of the second fabric, and a fourth fabric disposed on the first injection-molded material and the third fabric and including a fourth hole.

According to various embodiments, the first fabric, the second fabric, the first injection-molded material, and the third fabric of the strap may be configured to be compressed with an adhesive.

According to various embodiments, the third fabric may be configured as a two-layer 'U'-shaped fabric obtained by folding one fabric into two layers having the same length, and the two layers of the two-layer fabric may be stacked one over the other.

According to various embodiments, the electronic device cover may comprise a first fixing member disposed on the fourth fabric. The first fixing member may include a first plurality of holes and a first protrusion, wherein at least a part of the first fixing member protrudes in a first direction.

According to various embodiments, the electronic device cover may further comprise a second fixing member disposed on one surface facing in the first direction of the first cover. The second fixing member may include a second plurality of holes corresponding to the first plurality of holes of the first protrusion.

According to various embodiments, the first protrusion of the first fixing member may be configured to pass through the first hole, the second hole, the third hole, and the fourth hole.

According to various embodiments, the first injection-molded material may include a ring-shaped second protrusion surrounding an edge of the third hole and protruding in a second direction opposite to the first direction and a concave portion in which at least a portion of the second protrusion is formed to be concave in the first direction. The concave portion may be formed to be concave from a first point of the second protrusion to a point extending by 1/4 of an inner surface of the second protrusion.

According to various embodiments, a protruding shape of the first protrusion may correspond to the third hole.

According to various embodiments, the electronic device cover may further comprise a first fixing member disposed on the fourth fabric. The first fixing member may include a first plurality of holes, a first protrusion at least a part of the first fixing member protrudes in a first direction and a directional member protruding outward of an outer circumferential surface of the first protrusion.

According to various embodiments, the electronic device cover may further comprise a first fixing member disposed on the fourth fabric. The first fixing member may include a first plurality of holes, a first protrusion at least a part of the first fixing member protrudes in a first direction and a directional member protruding outward of an outer circumferential surface of the first protrusion.

According to various embodiments, the electronic device cover may further comprise a second injection-molded material contacting the first magnetic body. The first magnetic body and the second injection-molded material may be configured to be disposed between the first fabric and the second fabric.

According to various embodiments, the second fabric may further include a fifth hole formed at a position facing the first magnetic body. The cover may further include a first shielding material corresponding to the fifth hole and protecting the electronic device from the first magnetic body.

According to various embodiments, the electronic device cover may further comprise a second shielding material in the first cover facing the first magnetic body.

A method for using an electronic device cover, as a stand, according to various embodiments of the disclosure, may comprise a first step in which a second cover connected to be rotatable about a first cover fixing the electronic device is rotated at a first angle, a second step in which a strap having one end connected to the first cover is rotated at a second angle, and a third step of bending, to a third angle, at least a portion of the strap rotated at the second angle.

According to various embodiments, the strap may include a first area including a first end portion rotatably connected to the first cover, a second area including a second end portion including a first magnetic body and formed so that at least a portion thereof is bendable, and a third area connecting the first area and the second area.

According to various embodiments, the strap may be rotated at a designated angle and in a designated direction.

It is apparent to one of ordinary skill in the art that the electronic device cover 400 according to various embodiments of the disclosure as described above are not limited to the above-described embodiments and those shown in the drawings, and various changes, modifications, or alterations may be made thereto as long as they fall within the scope of the appended claims.

## Claims

1. A cover (400) of an electronic device (101), comprising:
a first cover (410) fixing the electronic device;
a second cover (420) rotatably connected to the first cover; and
a strap (600) including an end connected to the first cover,
wherein the strap includes:
a first area including a first end portion (604) of the strap rotatably connected to the first cover;
a second area including a second end portion (605) of the strap and a first magnetic body (710) located in the second end portion, wherein the second end portion is bent, but may be unfolded at a predetermined angle by an external force, wherein when the external force is removed, the second end portion has elasticity by which it may return to the bent shape;
and
a third area (603) connecting the first area and the second area, and
wherein the second cover includes a second magnetic body (720) positioned at an end portion of the second cover and configured to be magnetically coupled to the first magnetic body.

2. The cover (400) of claim 1, further comprising a hinge cover (430) connecting the first cover (410) and the second cover (420).

3. The cover (400) of claim 1, wherein the first cover (410) includes a cradle (401) positioned along an edge of the first cover and including an inner surface corresponding to a shape of the electronic device (101).

4. The cover (400) of claim 1, wherein the strap (600) includes:
a first fabric (610) including a first hole (611);
a second fabric (620) disposed on the first fabric and including a second hole (621);
a first injection-molded material (630) disposed on the first area of the second fabric and including a third hole (631);
a third fabric (640) disposed on the second area and the third area of the second fabric; and
a fourth fabric (650) disposed on the first injection-molded material and the third fabric and including a fourth hole (651).

5. The cover (400) of claim 4, wherein the third fabric (640) is configured as a two-layer 'U'-shaped fabric obtained by folding one fabric into two layers having the same length, and wherein the two layers of the two-layer fabric are stacked one over the other.

6. The cover (400) of claim 4, further comprising a first fixing member (500) disposed on the fourth fabric (650), wherein the first fixing member includes a first plurality of holes and a first protrusion (501), wherein at least a part of the first fixing member protrudes in a first direction.

7. The cover (400) of claim 6, further comprising a second fixing member (520) disposed on the first cover (410) and facing in the first direction, wherein the second fixing member includes a second plurality of holes corresponding to the first plurality of holes of the first protrusion.

8. The cover (400) of claim 6, wherein the first protrusion (501) of the first fixing member (500) is configured to pass through the first hole, the second hole, the third hole, and the fourth hole.

9. The cover (400) of claim 6, wherein the first injection-molded material (630) includes:
a ring-shaped second protrusion (632) surrounding an edge of the third hole and protruding in a second direction opposite to the first direction; and
a concave portion (633) in which at least a portion of the second protrusion is formed to be concave in the first direction, and wherein the concave portion is formed to be concave from a first point of an inner surface of the second protrusion to a second point extending from the first point by a designated distance.

10. The cover (400) of claim 6, wherein a protruding shape of the first protrusion (501) corresponds to the third hole.

11. The cover (400) of claim 9, further comprising a first fixing member (500) disposed on the fourth fabric, wherein the first fixing member includes:
a first plurality of holes,
a first protrusion (501), at least a part of the first fixing member protrudes in a first direction; and
a directional member (502) protruding outward of an outer circumferential surface of the first protrusion.

12. The cover (400) of claim 4, further comprising a second injection-molded material (660) contacting the first magnetic body (710), wherein the first magnetic body and the second injection-molded material are configured to be disposed between the first fabric (610) and the second fabric (620).

13. The cover (400) of claim 4, wherein the second fabric (620) further includes a fifth hole formed at a position facing the first magnetic body (710), and wherein the cover further includes a first shielding material (810) corresponding to the fifth hole and protecting the electronic device from the first magnetic body.

14. The cover (400) of claim 1, further comprising a second shielding material (820) in the first cover (410) facing the first magnetic body (710).

## Patentansprüche

1. Abdeckung (400) einer elektronischen Vorrichtung (101), umfassend:
eine erste Abdeckung (410), welche die elektronische Vorrichtung befestigt;
eine zweite Abdeckung (420), die drehbar mit der ersten Abdeckung verbunden ist; und
ein Band (600), das ein Ende beinhaltet, das mit der ersten Abdeckung verbunden ist,
wobei das Band Folgendes beinhaltet:
einen ersten Bereich, der einen ersten Endabschnitt (604) des Bandes beinhaltet, der drehbar mit der ersten Abdeckung verbunden ist;
einen zweiten Bereich, der einen zweiten Endabschnitt (605) des Bandes und einen ersten magnetischen Körper (710) beinhaltet, der sich in dem zweiten Endabschnitt befindet, wobei der zweite Endabschnitt gebogen ist, aber durch eine externe Kraft in einem vorbestimmten Winkel entfaltet werden kann, wobei, wenn die externe Kraft entfernt wird, der zweite Endabschnitt Elastizität aufweist, durch die er in die gebogene Form zurückkehren kann; und
einen dritten Bereich (603), der den ersten Bereich und den zweiten Bereich verbindet, und
wobei die zweite Abdeckung einen zweiten magnetischen Körper (720) beinhaltet, der an einem Endabschnitt der zweiten Abdeckung positioniert und konfiguriert ist, um magnetisch an den ersten magnetischen Körper gekoppelt zu sein.

2. Abdeckung (400) nach Anspruch 1, ferner umfassend eine Scharnierabdeckung (430), welche die erste Abdeckung (410) und die zweite Abdeckung (420) verbindet.

3. Abdeckung (400) nach Anspruch 1, wobei die erste Abdeckung (410) eine Halterung (401) beinhaltet, die entlang einer Kante der ersten Abdeckung positioniert ist und eine Innenfläche beinhaltet, die einer Form der elektronischen Vorrichtung (101) entspricht.

4. Abdeckung (400) nach Anspruch 1, wobei das Band (600) Folgendes beinhaltet:
ein erstes Gewebe (610), das ein erstes Loch (611) beinhaltet;
ein zweites Gewebe (620), das auf dem ersten Gewebe angeordnet ist und ein zweites Loch (621) beinhaltet;
ein erstes spritzgegossenes Material (630), das auf dem ersten Bereich des zweiten Gewebes angeordnet ist und ein drittes Loch (631) beinhaltet;
ein drittes Gewebe (640), das auf dem zweiten Bereich und dem dritten Bereich des zweiten Gewebes angeordnet ist; und
ein viertes Gewebe (650), das auf dem ersten spritzgegossenen Material und dem dritten Gewebe angeordnet ist und ein viertes Loch (651) beinhaltet.

5. Abdeckung (400) nach Anspruch 4, wobei das dritte Gewebe (640) als ein zweilagiges "U"-förmiges Gewebe konfiguriert ist, das durch Falten eines Gewebes in zwei Lagen mit der gleichen Länge erhalten wird, und wobei die zwei Lagen des zweilagigen Gewebes übereinander gestapelt sind.

6. Abdeckung (400) nach Anspruch 4, ferner umfassend ein erstes Befestigungselement (500), das auf dem vierten Gewebe (650) angeordnet ist, wobei das erste Befestigungselement eine erste Vielzahl von Löchern und einen ersten Vorsprung (501) beinhaltet, wobei zumindest ein Teil des ersten Befestigungselements in einer ersten Richtung vorspringt.

7. Abdeckung (400) nach Anspruch 6, ferner umfassend ein zweites Befestigungselement (520), das auf der ersten Abdeckung (410) angeordnet ist und in die erste Richtung weist, wobei das zweite Befestigungselement eine zweite Vielzahl von Löchern beinhaltet, die der ersten Vielzahl von Löchern des ersten Vorsprungs entspricht.

8. Abdeckung (400) nach Anspruch 6, wobei der erste Vorsprung (501) des ersten Befestigungselements (500) konfiguriert ist, um durch das erste Loch, das zweite Loch, das dritte Loch und das vierte Loch zu verlaufen.

9. Abdeckung (400) nach Anspruch 6, wobei das erste spritzgegossene Material (630) Folgendes beinhaltet:
einen ringförmigen zweiten Vorsprung (632), der eine Kante des dritten Lochs umgibt und in einer zweiten Richtung entgegengesetzt zu der ersten Richtung vorspringt; und
einen konkaven Abschnitt (633), in dem zumindest ein Abschnitt des zweiten Vorsprungs gebildet ist, um konkav in der ersten Richtung zu sein, und wobei der konkave Abschnitt gebildet ist, um konkav von einem ersten Punkt einer Innenfläche des zweiten Vorsprungs zu einem zweiten Punkt, der sich von dem ersten Punkt um einen bestimmten Abstand erstreckt, zu sein.

10. Abdeckung (400) nach Anspruch 6, wobei eine vorspringende Form des ersten Vorsprungs (501) dem dritten Loch entspricht.

11. Abdeckung (400) nach Anspruch 9, ferner umfassend ein erstes Befestigungselement (500), das auf dem vierten Gewebe angeordnet ist, wobei das erste Befestigungselement Folgendes beinhaltet:
eine erste Vielzahl von Löchern,
einen ersten Vorsprung (501), wobei zumindest ein Teil des ersten Befestigungselements in einer ersten Richtung vorspringt; und
ein Richtungselement (502), das von einer Außenumfangsfläche des ersten Vorsprungs nach außen vorspringt.

12. Abdeckung (400) nach Anspruch 4, ferner umfassend ein zweites spritzgegossenes Material (660), das den ersten magnetischen Körper (710) kontaktiert, wobei der erste magnetische Körper und das zweite spritzgegossene Material konfiguriert sind, um zwischen dem ersten Gewebe (610) und dem zweiten Gewebe (620) angeordnet zu sein.

13. Abdeckung (400) nach Anspruch 4, wobei das zweite Gewebe (620) ferner ein fünftes Loch beinhaltet, das an einer Position gebildet ist, die dem ersten magnetischen Körper (710) zugewandt ist, und wobei die Abdeckung ferner ein erstes Abschirmmaterial (810) beinhaltet, das dem fünften Loch entspricht und die elektronische Vorrichtung vor dem ersten magnetischen Körper schützt.

14. Abdeckung (400) nach Anspruch 1, ferner umfassend ein zweites Abschirmmaterial (820) in der ersten Abdeckung (410), das dem ersten magnetischen Körper (710) zugewandt ist.

## Revendications

1. Couvercle (400) d'un dispositif électronique (101), comprenant :
un premier couvercle (410) fixant le dispositif électronique ;
un second couvercle (420) relié de manière rotative au premier couvercle ; et
une sangle (600) comprenant une extrémité reliée au premier couvercle,
dans lequel la sangle comprend :
une première zone comprenant une première partie d'extrémité (604) de la sangle reliée de manière rotative au premier couvercle ;
une deuxième zone comprenant une seconde partie d'extrémité (605) de la sangle et un premier corps magnétique (710) situé dans la seconde partie d'extrémité, dans lequel la seconde partie d'extrémité est courbée, mais peut être dépliée à un angle prédéterminé par une force externe, dans lequel, lorsque la force externe est supprimée, la seconde partie d'extrémité comporte une élasticité par laquelle elle peut revenir à la forme courbée ;
et
une troisième zone (603) reliant la première zone et la deuxième zone, et
dans lequel le second couvercle comprend un second corps magnétique (720) positionné au niveau d'une partie d'extrémité du second couvercle et conçu pour être couplé magnétiquement au premier corps magnétique.

2. Couvercle (400) de la revendication 1, comprenant en outre un couvercle charnière (430) reliant le premier couvercle (410) et le second couvercle (420).

3. Couvercle (400) de la revendication 1, dans lequel le premier couvercle (410) comprend un berceau (401) positionné le long d'un bord du premier couvercle et comprenant une surface interne correspondant à une forme du dispositif électronique (101).

4. Couvercle (400) de la revendication 1, dans lequel la sangle (600) comprend :
un premier tissu (610) comprenant un premier trou (611) ;
un deuxième tissu (620) disposé sur le premier tissu et comprenant un deuxième trou (621) ;
un premier matériau moulé par injection (630) disposé sur la première zone du deuxième tissu et comprenant un troisième trou (631) ;
un troisième tissu (640) disposé sur la deuxième zone et la troisième zone du deuxième tissu ; et
un quatrième tissu (650) disposé sur le premier matériau moulé par injection et le troisième tissu et comprenant un quatrième trou (651).

5. Couvercle (400) de la revendication 4, dans lequel le troisième tissu (640) est conçu comme un tissu en forme de « U » à deux couches obtenu en pliant un tissu en deux couches comportant la même longueur, et dans lequel les deux couches du tissu à deux couches sont empilées l'une sur l'autre.

6. Couvercle (400) de la revendication 4, comprenant en outre un premier élément de fixation (500) disposé sur le quatrième tissu (650), dans lequel le premier élément de fixation comprend une première pluralité de trous et une première saillie (501), dans lequel au moins une partie du premier élément de fixation fait saillie dans une première direction.

7. Couvercle (400) de la revendication 6, comprenant en outre un second élément de fixation (520) disposé sur le premier couvercle (410) et faisant face à la première direction, dans lequel le second élément de fixation comprend une seconde pluralité de trous correspondant à la première pluralité de trous de la première saillie.

8. Couvercle (400) de la revendication 6, dans lequel la première saillie (501) du premier élément de fixation (500) est conçue pour passer à travers le premier trou, le deuxième trou, le troisième trou et le quatrième trou.

9. Couvercle (400) de la revendication 6, dans lequel le premier matériau moulé par injection (630) comprend :
une seconde saillie (632) en forme d'anneau entourant un bord du troisième trou et faisant saillie dans une seconde direction opposée à la première direction ; et
une partie concave (633) où au moins une partie de la seconde saillie est formée pour être concave dans la première direction, et dans lequel la partie concave est formée pour être concave à partir d'un premier point d'une surface interne de la seconde saillie vers un second point s'étendant à partir du premier point sur une distance désignée.

10. Couvercle (400) de la revendication 6, dans lequel une forme saillante de la première saillie (501) correspond au troisième trou.

11. Couvercle (400) de la revendication 9, comprenant en outre un premier élément de fixation (500) disposé sur le quatrième tissu, dans lequel le premier élément de fixation comprend :
une première pluralité de trous,
une première saillie (501), au moins une partie du premier élément de fixation fait saillie dans une première direction ; et
un élément directionnel (502) faisant saillie vers l'extérieur d'une surface circonférentielle externe de la première saillie.

12. Couvercle (400) de la revendication 4, comprenant en outre un second matériau moulé par injection (660) en contact avec le premier corps magnétique (710), dans lequel le premier corps magnétique et le second matériau moulé par injection sont conçus pour être disposés entre le premier tissu (610) et le deuxième tissu (620).

13. Couvercle (400) de la revendication 4, dans lequel le deuxième tissu (620) comprend en outre un cinquième trou formé au niveau d'une position faisant face au premier corps magnétique (710), et dans lequel le couvercle comprend en outre un premier matériau de blindage (810) correspondant au cinquième trou et protégeant le dispositif électronique du premier corps magnétique.

14. Couvercle (400) de la revendication 1, comprenant en outre un second matériau de blindage (820) dans le premier couvercle (410) faisant face au premier corps magnétique (710).
